(19) Europäisches Patentamt
European Patent Office
Office européen des brevets

(11) Veröffentlichungsnummer: **0 285 092 B1**

(12) # EUROPÄISCHE PATENTSCHRIFT

(45) Veröffentlichungstag der Patentschrift: **14.11.90**

(51) Int. Cl.[5]: **C04B 41/52**, C04B 41/49

(21) Anmeldenummer: **88105069.4**

(22) Anmeldetag: **29.03.88**

(54) **Verfahren zur Verstärkung des Haftens von polymeren Stoffen.**

(30) Priorität: **03.04.87 DE 3711225**

(43) Veröffentlichungstag der Anmeldung:
**05.10.88 Patentblatt 88/40**

(45) Bekanntmachung des Hinweises auf die Patenterteilung:
**14.11.90 Patentblatt 90/46**

(84) Benannte Vertragsstaaten:
**BE DE FR GB IT NL**

(56) Entgegenhaltungen:
**EP-A- 154 985**
**EP-A- 0 153 500**
**EP-A- 0 275 050**
**FR-A- 2 440 925**
**GB-A- 2 056 995**
**US-A- 3 706 592**

**CHEMICAL ABSTRACTS, Band 102, Nr. 26, Juli 1985, Seite 283, Zusammenfassung Nr. 225148d, Columbus, Ohio, US; & SE-A-435 709 (NORDTEND AB) 15-10-1984**

**Die Akte enthält technische Angaben, die nach dem Eingang der Anmeldung eingereicht wurden und die nicht in dieser Patentschrift enthalten sind.**

(73) Patentinhaber: **WACKER-CHEMIE GMBH, Prinzregentenstrasse 22, D-8000 München 22(DE)**

(72) Erfinder: **Eck, Herbert, Dr. Dipl.-Chemiker, Burg 11, D-8263 Burghausen(DE)**
Erfinder: **Fleischmann, Gerald, Dr. Dipl.-Chemiker, Karrerweg 23, D-8261 Emmerting(DE)**
Erfinder: **Prasse, Alfred, Zweigstrasse 5, D-8263 Burghausen(DE)**
Erfinder: **Kolbig, Kunigunde, Waldstrasse 2, D-8342 Gumpersdorf-Postann(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Es bestand die Aufgabe, durch ein wenig aufwendiges Verfahren unter Verwendung von verhältnismäßig wenig toxischen Stoffen das Haften von polymeren Stoffen, die organische Gruppen enthalten oder aus solchen Gruppen aufgebaut sind, auf Erdalkalicarbonatoberflächen zu verstärken, wobei diese Verstärkung des Haftens polymerer Stoffe teilweise auch bei Einwirkung von Schwefeldioxid auf die mit polymerem Stoff überzogene Oberfläche erhalten bleibt. Diese Aufgabe wird durch die Erfindung gelöst.

Gegenstand der Erfindung ist ein Verfahren zur Verstärkung des Haftens von polymeren Stoffen, die organische Gruppen enthalten oder aus solchen Gruppen aufgebaut sind, auf Erdalkalicarbonatoberflächen, dadurch gekennzeichnet, daß bevor polymerer Stoff der vorstehend definierten Art in Berührung mit der Erdalkalicarbonatoberfläche, auf der er stärker haften soll, gebracht wird, auf diese Erdalkalicarbonatoberfläche eine Lösung mindestens einer Organosiliciumverbindung mit direkt an Silicium gebundenem Fluor und durchschnittlich höchstens 1,8 SiC-gebundenen organischen Resten je Siliciumatom in organischem aprotischen Lösungsmittel aufgetragen und dann das Lösungsmittel entfernt wird.

Bei den Erdalkalicarbonatoberflächen, auf denen durch das erfindungsgemäße Verfahren das Haften von polymeren Stoffen, die organische Gruppen enthalten oder aus solchen Gruppen aufgebaut sind, verstärkt wird, kann es sich um solche von Magnesiumcarbonat, Calciumcarbonat, Bariumcarbonat, von Gemischen aus mindestens zwei derartiger Carbonate, weiterhin z.B. von Erdalkalicarbonat enthaltenden Steinen, wie natürlichen oder künstlichen Kalksandsteinen, Nagelfluh oder Quelltuffen, Beton, Kalkmörtel oder -putzen handeln. Diese Erdalkalicarbonatoberflächen können porös und rauh sein, wie diejenigen von Kalksandsteinen, oder praktisch von Poren frei und glatt sein wie diejenigen von poliertem Marmor. Die Erdalkalicarbonatoberflächen können diejenigen von Pulvern oder Mehlen sein, wie sie z.B. bei Füllstoffen, z.B. gemahlener Kreide, oder anderem als Füllstoff geeignetem Calciumcarbonat, z.B. feinteiligem, nadelförmigem Calciumcarbonat, vorliegen, oder diejenigen von größeren Gebilden sein, wie von Blöcken, Platten oder Fassaden.

Bei den erfindungsgemäß verwendeten Organosiliciumverbindungen mit direkt an Silicium gebundenen Fluor und durchschnittlich höchstens 1,8 SiC-gebundenen organischen Resten je Siliciumatom handelt es sich vorzugsweise um solche der Formel

$R_aSiF_b(OR^1)_{4-a-b}$,

worin R gleiche oder verschiedene, gegebenenfalls substituierte, einwertige Kohlenwasserstoffreste und $R^1$ glei-che oder verschiedene Alkyl- oder Alkoxyalkylenreste mit jeweils 1 bis 4 Kohlenstoffatomen je Rest bedeutet und a 0, 1, 2 oder 3, durchschnittlich 0,9 bis 1,8 und b 1, 2, 3 oder 4 ist, wobei die Summe von a + b höchstens 4 ist, oder deren höchstens 15 Siliciumatome je Molekül aufweisende Teilhydrolysate.

Wird nur eine einzige Art eines derartigen Silans verwendet, so muß a natürlich den Wert 1 haben.

Bei den erfindungsgemäß verwendeten Organosiliciumverbindungen mit direkt an Silicium gebundenem Fluor und durchschnittlich höchstens 1,8 SiC-gebundenen organischen Resten je Siliciumatom kann es sich aber auch z.B. um Silcarbane mit direkt an Silicium gebundenem Fluor, wie solche der Formel

$F_3Si(CH_2)_2SiF_3$,

oder um mindestens 16 Siliciumatome je Molekül aufweisende Organopolysiloxane aus Einheiten der Formel

$$R_aF_cSi(OR^1)_d(OH)_eO_{\frac{4-a-c-d-e}{2}}$$

handeln, worin R, $R^1$ und a jeweils die oben dafür angegebene Bedeutung haben, c 0, 1, 2 oder 3, durchschnittlich 0,1 bis 1,8, d 0, 1, 2 oder 3, durchschnittlich 0,0 bis 2,0, und e 0, 1 oder 2, durchschnittlich 0,0 bis 0,5 ist mit der Maßgabe, daß die Summe von a + c + d + e bei jeder Einheit höchstens 3,5 ist.

Zusätzlich zu Organosiliciumverbindung mit direkt an Silicium gebundenem Fluor und durchschnittlich höchstens 1,8 SiC-gebundenen organischen Resten je Siliciumatom können die erfindungsgemäß verwendeten Lösungen gegebenenfalls und, weil das ihren Gehalt an direkt an Silicium gebendenem Fluor je Siliciumatom, welches auch bei Organosiliciumverbindungen physiologisch nicht völlig unbedenklich ist, verringert, vorteilhafterweise, mindestens eine von direkt an Silicium gebundenem Fluor freie weitere organische Siliciumverbindung enthalten. Beispiele für solche weiteren Siliciumverbindungen sind insbesondere solche der Formel

$R_fSi(OR^1)_{4-f}$,

worin R und $R^1$ jeweils die oben dafür angegebene Bedeutung haben und f 0, 1, 2 oder 3, durchschnittlich 0,0 bis 1,8 ist, deren höchstens 15 Siliciumatome je Molekül aufweisende Teilhydrolysate, Silcarbane ohne direkt an Silicium gebundenes Fluor, wie solche der Formel

$(C_2H_5O)_3Si(CH_2)_2Si(OC_2H_5)_3$,

und Organopolysiloxane aus Einheiten der Formel

$$R_aH_gSi(OR^1)_d(OH)_eO_{\frac{4-a-d-e-g}{2}} ,$$

worin R, $R^1$, a, d und e jeweils die oben dafür angegebene Bedeutung haben und g 0 oder 1, durchschnittlich 0 bis 1 ist, mit der Maßgabe, daß die Summe von a + d + e + g bei jeder Einheit höchstens 3,5 ist.

Vorzugsweise enthalten die erfindungsgemäß verwendeten Lösungen, die auf die Erdalkalicarbonatoberflächen aufgebracht werden, bevor diese mit polymerem Stoff, dessen Haften verstärkt werden soll, in Berührung gebracht werden, 0,5 bis 300 direkt in Silicium gebundene Fluoratome je 100 Siliciumatome.

Vorzugsweise enthalten die SiC-gebundenen organischen Reste in den erfindungsgemäß verwendeten Organosiliciumverbindungen und damit die Reste R in den oben angegebenen Formeln höchstens 18 Kohlenstoffatome je Rest. Beispiele für Kohlenwasserstoffreste als SiC-gebundene organische Reste und damit für Kohlenwasserstoffreste R in den oben angegebenen Formeln sind Alklyreste, wie der Methyl-, Ethyl-,n-Propyl-, Isopropyl- und 2-Ethylhexylrest sowie Hexyl- und Octadecylreste; Kohlenwasserstoffreste mit mindestens einer aliphatischen Doppelbindung, wie der Vinyl-, Allyl-, Ethylallyl- und Butadienylrest; Cycloalkylreste, wie der Cyclohexylrest und Methylcyclohexylreste; Arylreste, wie der Phenylrest; Alkarylreste, wie Tolylreste; und Aralkylreste, wie der Benzylrest.

Beispiele für substituierte Kohlenwasserstoffreste als SiC-gebundene organische Reste in den erfindungsgemäß verwendeten Organosiliciumverbindungen und damit für substituierte Kohlenwasserstoffreste R in den oben angegebenen Formeln sind halogenierte Kohlenwasserstoffreste, wie durch Fluoratome substituierte Alkylreste, z.B. der 3,3,3-Trifluorpropylrest, sowie Chlorphenylreste; Mercaptoalkylreste, wie der 3-Mercaptopropylrest, Acyloxyalkylreste, wie der 3-Methacryloxypropylrest, Reste der Formel

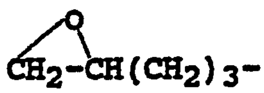

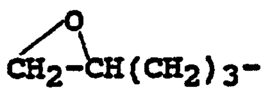

$$H_2N(CH_2)_2NH(CH_2)_3-$$

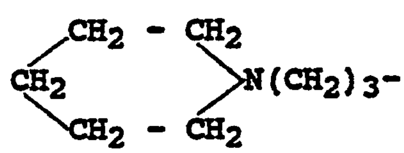

und Cyanalkylreste, wie der β-Cyanoethylrest.

Beispiele für Alkylreste $R^1$ sind der Methyl-, Ethyl-, n-Propyl-, Isopropyl-, n-Butyl- und sec.-Butylrest. Das wichtigste Beispiel für einen Alkoxyalkylenrest $R^1$ ist der β-Methoxyethylenrest.

Als Organosiliciumverbindung mit direkt an Silicium gebundenem Fluor und nicht mehr als 1,8 SiC-gebundenem organischen Resten je Siliciumatom ist Phenyltrifluorsilan besonders bevorzugt. Weitere Beispiele für Silane mit direkt an Silicium gebundenem Fluor und nicht mehr als 1,8 SiC-ge-bundenen organischen Resten sind Methyltrifluorsilan, Methyl-diethoxyfluorsilan, Methylphenyldifluorsilan und 3-Methacryloxypropyltrifluorsilan, sowie Gemische aus mindestens zwei dieser Silane.

Einzelne Beispiele für orgnaische Siliciumverbindungen, die in den erfindungsgemäß verwendeten Lösungen, die auf die Erdalkalicarbonatoberfiächen aufgebracht werden, bevor diese mit polymerem Stoff, dessen Haften verstärkt werden soll, in Berührung gebracht werden, zusätzlich zu Organosiliciumverbindung mit direkt an Silicium gebundenem Fluor und durchschnittlich höchstens 1,8 SiC-gebundenen Resten je Siliciumatom vorliegen können, sind Methyltrimethoxysilan, Phenyltriethoxysilan, Tetraethoxysilan und 3-Methacryloxypropyltrimethoxysilan.

Als organische aprotische Lösungsmittel sind polare organische, aprotische Lösungsmittel bevorzugt. Unter diesen polaren Lösungsmitteln sind wiederum Essigsäureester von Alkanolen mit 1 bis 4 Kohlenstoffatomen je Alkanolmolekül, insbesondere Ethanol, besonders bevorzugt. Weitere Beispiele für im Rahmen des erfindungsgemäßen Verfahrens verwendbare polare organische aprotische Lösungsmittel sind Chlorkohlen-wasserstoffe, wie Methylenchlorid, 1,2-Dichlorethan, 1,1,1-Trichlorethan, 1,2-Dichlorethylen, 1,1,2-Trichlorethylen, Perchlorethylen und Chlorbenzol; Ketone, wie Methylethylketon und Cyclohexanon; sowie Ether, wie Di-sec.-butylether.

Es kann eine Art von organischem Lösungsmittel verwendet werden. Es können aber auch Gemische aus mindestens zwei verschiedenen Arten derartiger Lösungsmittel verwendet werden.

Vorzugsweise enthalten die erfindungsgemäß verwendeten Lösungen 0,03 bis 18, bevorzugter 0,3 bis 10, insbesondere 1,0 bis 3,5 Grammatom direkt an Silicium gebundenes Fluor je 100g ihres Gesamtgewichts.

Vorzugsweise sind die Erdalkalicarbonatoberflächen vor dem Auftragen der erfindungsgemäß verwendeten Lösungen frei von fettartigen Stoffen und anderen Verunreinigungen, wie Staub. Vor dem Auftragen der erfindungsgemäß verwendeten Lösungen können die Erdalkalicarbonatoberflächen trocken oder feucht, weil auf ihnen Wasser oder Lösungsmittel adsorbiert ist, sein. Vorzugsweise sind sie etwas feucht, weil auf ihnen Wasser adsorbiert ist.

Das Auftragen der erfindungsgemäß verwendeten Lösungen auf die damit zu behandelnden Erdalkalicarbonatoberflächen kann in beliebiger für das Auftragen von Lösungen in aprotischem organischem Lösungsmittel auf Oberflächen von normalerweise festen Stoffen geeigneter Weise, z.B. durch Aufsprühen, Gießen, Streichen, Walzen oder Tauchen bzw. durch Vermischen mit Erdalkalicarbonatpulver oder -mehl, erfolgen.

Die Entfernung vom Lösungsmittel von mit erfindungsgemäß verwendeter Lösung behandelter Erdalkalicarbonatoberfläche, bevor diese mit polymerem Stoff, dessen Haften auf dieser Oberfläche verstärkt werden soll, in Berührung gebracht wird, kann durch Verdunsten lassen oder Verdampfen des Lösungsmittels erfolgen.

Bei den polymeren Stoffen, die organische Gruppen enthalten oder aus solchen Gruppen aufgebaut sind und mit den mit erfindungsgemäßer Lösung vorbehandelten Erdalkalicarbonatoberflächen nach dem Entfernen von Lösungsmittel von diesen Oberflächen in Berührung gebracht werden, kann es sich um beliebige polymere Stoffe handeln, die organische Gruppen enthalten oder aus solchen Gruppen bestehen, mit denen auch bisher Erdalkalicarbonatoberflächen überzogen oder imprägniert werden konnten, wobei sich die polymeren Stoffe auch aus niedermolekularen Stoffen, wie Methyltriethoxysilan, erst nach dem Auftragen bilden können, oder in denen auch bisher Erdalkalicarbonate als Füllstoffe oder Verstärkungsmittel vorliegen konnten.

Bevorzugte Beispiele für polymere Stoffe, die organische Gruppen enthalten,, oder aus solchen Gruppen aufgebaut sind und mit den mit erfindungsgemäß verwendeter Lösung vorbehandelten Erdalkalicarbonatoberflächen nach dem Entfernen des Lösungsmittels von diesen Oberflächen in Berührung gebracht werden können, sind solche, die zumindest teilweise aus sich von Alkylestern oder Amiden der Acrylsäure oder Methacrylsäure ableitenden Einheiten und gegebenenfalls sich von Acryloxyalkylsilanen, insbesondere gamma-Acryloxy-propylsilanen, und/oder Methacryloxyalkylsilanen, insbeson-dere 3-Methacryloxypropylsilanen, wie 3-Methacryloxypropyl-trimethoxysilan, ableitenden Einheiten aufgebaut sind.

Weitere Beispiele für polymere Stoffe, die aus organischen Gruppen aufgebaut sind un mit den mit erfindungsgemäß verwendeter Lösung vorbehandelten Erdalkalicarbonatoberflächen nach dem Entfernen des Lösungsmittels von diesen Oberflächen in Berührung gebracht werden können, sind Polyvinylcvhlorid, Polyvinylacetat, Polyethylen und Mischpolymere der vorstehend genannten Polymeren, Elastomere natürlicher Herkunft, reinorganische, synthetische Elastomere, wie EPDM oder Polybutadien, Epoxydharze, Polyurethane, Polyester, Polyamide und Polyharnstoffe.

Beispiele für polymere Stoffe, die organische Gruppen enthalten und mit den mit erfindungsgemäß verwendeter Lösung vorbehandelten Erdalkalicarbonatoberflächen nach dem Entfernen vom Lösungsmittel von diesen Oberflächen in Berührung gebracht werden können bzw. für niedermolekulare Stoffe, aus denen sich derartige Polymere auf diesen Oberflächen bilden können, sind Organoalkoxysilane, z.B. Methyltriethoxy-silan und Phenyltriethoxysilan, oder deren Teilhydrolysate oder thermoplastische oder duroplastische Organopolysiloxane, einschließlich Organopolysiloxanelastomeren.

Auf die erfindungsgemäß vorbehandelten Erdalkalicarbonatoberflächen kann eine Schicht von polymerem Stoff aufgetragen bzw. auf diesen Oberflächen erzeugt werden. Auf die erfindungsgemäß vorbehandelten Erdalkalicarbonatoberflächen können aber auch mindestens zwei Schichten aus gleichem oder verschiedenem polymerem Stoff aufgetragen bzw. auf diesen Oberflächen erzeugt werden.

Die polymeren Stoffe, die aus organischen Gruppen aufgebaut sind oder solche Gruppen enthalten, können auf die mit erfindungsgemäß verwendeter Lösung vorbehandelten Erdalkalicarbonatorberflächen nach dem Entfernen des Lösungsmittels von diesen Oberflächen in beliebiger Weise in Berührung gebracht werden, in der polymere Stoffe der vorstehend definierten Art auch bisher in Berührung mit Oberflächen gebracht werden konnten, z.B. durch Vermischen von aus Erdalkalicarbonat bestehenden oder Erdalkalicarbonat enthaltenden, erfindungsge mäß vorbehandelten Füllstoffen mit derartigen polymeren Stoffen oder durch Auftragen derartiger polymerer Stoffe auf die zu überziehenden Oberflächen, z.B. durch Streichen, Sprühen, Gießen, Walzen oder Tauchen. Dabei können die polymeren Stoffe in unverdünnter Form, soweit ihre Viskosität dies zuläßt, oder in Form von Lösungen oder Dispersionen angewandt werden.

In den folgenden Beispielen beziehen sich alle Angaben von Prozentsätzen auf das Gewicht, soweit nichts anderes angegeben ist.

Beispiele 1 bis 5

Bei jedem der in der folgenden Tabelle I bezifferten Beispiele wird jeweils 1g einer Lösung aus
10% Phenyltrifluorsilan, 40% Methyltrimethoxysilan und 50% Essigsäureethylester (Beispiel 1)
10% Phenyltrifluorsilan, 10% 3-Methacryloxypropyltrimethoxysilan und 80% Essigsäureethylester (Beispiel 2)
5% Phenyltrifluorsilan, 40% Methyltrimethoxysilan und 55% Essigsäureethylester (Beispiel 3 und 4)
10% Phenyltrifluorsilan, 10 % Tetraethoxysilan, 15% Phenyltriethoxysilan, 15% Methyltrimethoxysilan und 50% Essigsäureethylester (Beispiel 5)
auf 100 $cm^2$ große Oberflächen von polierten Marmorplatten der in Tabelle I angegebenen Herkunft aufgetragen, die vorher mit von Fremdionen befreitem Wasser gespült und eine Stunde bei Raumtemperatur stehengelassen wurden, sodaß sie bei dem Auftragen der Lösung noch feucht sind. Dann werden die Platten 4 Stunden bei Raumtemperatur stehengelassen, um das Lösungsmittel durch Verdunsten zu entfernen. Danach wird auf die so vorbehandelten Erdalkalicarbonatoberflächen ein handelsüblicher Lack auf Grundlage eines Mischpolymerisats von Methacrylsäuremethylester und Methacrylsäureethylester ("Paraloid B72", wobei die Bezeichnung "Paraloid" ein eingetragenes Warenzeichen ist, der Fa. Rohm & Haas Co., Philadelphia, Pa., USA) aufgetragen. Die Bewertung der Stärke des Haftens der Beschichtung auf der Calciumcarbonat-Oberfläche erfolgt durch Gitterschnittprüfung nach DIN (Deutsche Industrie Norm) 53151 vom Mai 1981. Dabei ist die Stärke des Haftens der Beschichtung bei einem Gitterschnitt-Kennwert von 0 am höchsten. Je höher der Gitterschnitt-Kennwert ist, desto schwächer ist das Haften der Beschichtung auf der Unterlage.

Tabelle I

| Beispiel bzw. Vergleichs-versuch | Marmorart | Gitterschnitt-Kennwert Gt 1) | 2) | 3) |
|---|---|---|---|---|
| 1 | Jura | 2 | 0-1 | 0-1 |
| 2 | " | 0 | 1 | 1 |
| 3 | " | 0 | 1 | ++) |
| a4) | " | 2-3 | 3 | +++) |
| 4 | Botticino | 0 | 0-1 | ++) |
| 5 | " | 0-1 | 1 | +) |
| b4) | " | 1-2 | 1-2 | +++) |

1) nach 16 Stunden Lagerung bei Raumtemperatur an der Lu

2) nach 16 Stunden Lagerung bei Raumtemperatur unter mit Wasser gesättigter und 20g Schwefeldioxid je 50l bei und 1000 hPa (abs.) enthaltender Luft

3) nach 16 Stunden Lagerung unter 6% Schwefeldioxid enth tendem Wasser

4) Vergleichsversuche, d.h. ohne Vorbehandlung des Marmo

+) Lack löst sich teilweise von der Unterlage ab, ohne d der Marmor angegriffen ist

++) Marmor ist geringfügig angegriffen

+++) stark verätzte Marmor-Oberfläche

Beispiele 6 bis 11

Bei jedem der in der folgenden Tabelle II bezifferten Beispiele wird jeweils 1g einer Lösung aus
10% Phenyltrifluorsilan, 10% 3-Methacryloxypropyltrimethoxysilan und 80% Essisäureethylester (Beispiel 6)
5% Phenyltrifluorsilan, 40% Methyltrimethoxysilan und 55% Essigsäureethylester (Beispiel 7 und 11)
10% Phenyltrifluorsilan, 40% Methyltrimethoxysilan und 50% Essigsäureethylester (Beispiel 8)
5% Phenyltrifluorsilan, 5% Methyltrimethoxysilan und 90% Essigsäureethylester (Beispiel 9)
5% Phenyltrifluorsilan, 5% Tetraethoxysilan und 90% Essigsäureethylester (Beispiel 10)
auf 100cm² große Oberflächen von polierten Marmorplatten der in Tabelle II angegebenen Herkunft aufgetragen, die vorher mit von Fremdionen befreitem Wasser gespült und eine Stunde bei Raumtempertur stehen gelassen wurden, sodaß sie beim Auftragen der Lösung noch feucth sind. Dann werden die Platten 4 Stunden bei Raumtemperatur stehen gelassen, um das Lösungsmittel durch Verdunsten zu entfernen. Danach wird auf die so vorbehandelten Erdalkalicarbonat-Oberflächen ein handelsüblicher Lack

auf Grundlage eines Mischpolymerisats aus 86% Methacrylsäuremethylester, 12% Acrylsäure-2-hydroxyethylester und 2% 3-Methacryloxypropyltrimethoxysilan aufgetragen. Die Bewertung der Stärke des Haftens der Beschichtung auf der Calciumcarbonat-Oberfläche erfolgt wie in Beispiel 1 beschrieben.

## Tabelle II

| Beispiel bzw. Vergleichsversuch | Marmorart | Gitterschnitt-Kennwe: Gt 1) | 2) |
|---|---|---|---|
| 6 | Jura | 0 | 2 |
| 7 | " | 1 | 1 |
| 8 | " | 2 | 0-1 |
| 9 | " | 0 | 0-1 |
| 10 | " | 0 | 0-1 |
| 11 | Botticino | 1 | 1 |
| C4) | " | 1-2 | 2 |

1) - 4) gleiche Bedeutung wie bei Tabelle I
+) - +++) " " " " " " I

Beispiele 12 und 13

12. Die Arbeitsweise von Beispiel 1 wird wiederholt mit der Abänderung, daß vor dem Auftragen des handelsüblichen Lacks auf Grundlage eines Mischpolymerisats von Methacrylsäuremethylester und Methacrylsäureethylester auf die durch Auftragen der Lösung aus 10% Phenyltrifluorsilan, 40% Methyltrimethoxysilan und 50% Essigsäureethylester und Verdunsten lassen des Lösungsmittels vorbehandelte Marmoroberfläche ein Gemisch aus 99% Phenyltriethoxysilan und 1% Di-n-butylzinndilaurat (Hydrolyse- und Kondensationskatalysator) aufgetragen wird.

13. Die in Beispiel 12 angegebene Arbeitsweise wird wiederholt mit der Abänderung, daß die 40% Methyltrimethoxysilan durch 20% Phenyltriethoxysilan und 20% Methyltrimethoxysilan ersetzt werden.

## Tabelle III

| Beispiel | Gitterschnitt-Kennwert Gt | | |
|---|---|---|---|
| | 1) | 2) | 3) |
| 11 | 2 | 0-1 | 0-1 |
| 12 | 0-1 | 0 | 0 |

1) - 3) gleiche Bedeutung wie bei Tabelle I

**Patentansprüche**

1. Verfahren zur Verstärkung des Haftens von polymeren Stoffen, die organische Gruppen enthalten oder aus solchen Gruppen aufgebaut sind, auf Erdalkalicarbonat-Oberflächen, dadurch gekennzeichnet, daß bevor polymerer Stoff der vorstehend definierten Art in Berührung mit der Erdalkalicarbonat-Oberfläche, auf der er stärker haften soll, gebracht wird, auf diese Erdalkalicarbonat-Oberfläche eine Lösung mindestens einer Organosiliciumverbindung mit direkt an Silicium gebundenem Fluor und durchschnittlich höchstens 1,8 SiC-gebundenen organischen Resten je Siliciumatom in organischem aprotischem Lösungsmittel aufgetragen und dann das Lösungsmittel entfernt wird.

2. Verfahren nach Anspruch 1, dadurch gekennzeichnet, daß die Erdalkalicarbonat-Oberfläche diejenige von Marmor ist.

3. Verfahren nach Anspruch 1 oder 2, dadurch gekennzeichnet, daß als Organosiliciumverbindung mit direkt an Silicium gebundenem Fluor Phenyltrifluorsilan verwendet wird.

4. Verfahren nach mindestens einem der Ansprüche 1 bis 3, dadurch gekennzeichnet, daß die mindestens eine Organosiliciumverbindung mit direkt an Silicium gebundenem Fluor enthaltende Lösung zusätzlich zu derartiger Siliciumverbindung mindestens eine von direkt an Silicium gebundenem Fluor freie weitere Organosiliciumverbindung enthalten.

**Revendications**

1. Procédé pour renforcer l'adhérence de matières polymères, contenant des groupes organiques ou constituées de groupes de ce genre, sur des surfaces de carbonate de métaux alcalino-terreux, caractérisé en ce que, avant que la matière polymère du type défini ci-dessus ne soit mise en contact avec la surface de carbonate de métaux alcalino-terreux sur laquelle elle doit adhérer plus fortement, on applique sur cette surface de carbonate de métaux alcalino-terreux une solution d'au moins un composé organique du silicium comportant des atomes de fluor directement liés au silicium et en moyenne au plus 1,8 radicaux organiques à liaison Si–C par atome de silicium dans un solvant aprotique organique, puis qu'on chasse le solvant.

2. Procédé selon la revendication 1, caractérisé en ce que la surface de carbonate de métaux alcalino-terreux est une surface de marbre.

3. Procédé selon la revendication 1 ou 2, caractérisé en ce qu'on utilise comme composé organique du silicium comportant des atomes de fluor directement liés au silicium du phényltrifluorosilane.

4. Procédé selon au moins l'une des revendications 1 à 3, caractérisé en ce que la solution contenant au moins un composé organique du silicium comportant des atomes de fluor directement liés au silicium contient, en plus de ce composé du silicium, au moins un autre composé organique du silicium, exempt d'atomes de fluor directement liés au silicium.

**Claims**

1. Process for strengthening the adhesion to alkaline earth metal carbonate surfaces of polymeric materials containing organic groups or being composed of such groups, characterized in that before a polymeric material of the type defined above is brought into contact with the alkaline earth metal carbonate

surface to which it should adhere more strongly, a solution of at least one organosilicon compound containing fluorine attached directly to silicon and on average not more than 1.8 SiC-linked organic radicals per silicon atom in an organic aprotic solvent is applied to this alkaline earth metal carbcnate surface and the solvent is then removed.

2. Process according to Claim 1, characterized in that the alkaline earth metal carbonate surface is a surface of marble.

3. Process according to Claim 1 or 2, characterized in that phenyltrifluorosilane is used as the organosilicon compound having fluorine attached directly to silicon.

4. Process according to at least one of Claims 1 to 3, characterized in that the solution containing at least one organosilicon compound having fluorine directly attached to silicon contain (sic), in addition to a silicon compound of this type, at least one further organosilicon compound which is free from fluorine attached directly to silicon.